# EUROPÄISCHE PATENTSCHRIFT

(11) **EP 1 591 077 B1**
(45) Veröffentlichungstag und Bekanntmachung des Hinweises auf die Patenterteilung: **23.11.2011**
(21) Anmeldenummer: 05013879.1
(22) Anmeldetag: 18.10.2000
(51) Int. Cl.: A61C 17/34

(54) **Verfahren zum Herstellen eines Körperpflegegerätes, insbesondere eines Zahnpflegegerätes**
Method for the manufacturing of a body care device, especially a dental care device
Méthode de fabrication d'un dispositif de soins du corps, en particulier de soins dentaires

(30) Priorität: 19.10.1999 DE 19950204; 03.11.1999 DE 29919053 U
(43) Veröffentlichungstag der Anmeldung: 02.11.2005
(62) Teilanmeldung aus: 00965717.2
(73) Patentinhaber: Trisa Holding AG, 6234 Triengen (CH)
(72) Erfinder: Häfliger, Peter, 6234 Triengen (CH); Fischer, Franz, 6234 Triengen (CH); Elster, Günther, 89312 Günzburg (DE)
(74) Vertreter: Schaad, Balass, Menzl & Partner AG

(56) Entgegenhaltungen:
- GB-A- 2 250 428
- US-A- 4 701 999
- US-A- 5 546 624

## Beschreibung

Die Erfindung betrifft Verfahren zum Herstellen eines Körperpflegegerätes, insbesondere eines Zahnpflegegerätes, gemäss dem Oberbegriff des Anspruches 1 sowie ein nach diesem Verfahren hergestelltes Körperpflegegerät.

Nächstkommender Stand der Technik: US-A-5546624.

Der vorliegenden Erfindung liegt die Aufgabe zugrunde, ein Verfahren der eingangs genannten Art zu schaffen, das auf einfache Weise die Herstellung von Körperpflegegeräten erlaubt.

Diese Aufgabe wird erfindungsgemäss durch ein Verfahren mit den Merkmalen des Anspruches 1 gelöst. Das nach diesem Verfahren hergestellte Körperpflegegerät zeichnet sich erfindungsgemäss durch die Merkmale des Anspruches 13 aus.

Bevorzugte Weiterausgestaltungen des erfindungsgemässen Verfahrens bzw. des erfindungsgemässen Körperpflegegerätes bilden Gegenstand der abhängigen Ansprüche.

Die Erfindung wird nun anhand der Zeichnung näher erläutert.

Es zeigen rein schematisch:
- Fig. 1: in Seitenansicht und teilweise im Schnitt ein erstes Ausführungsbeispiel einer Zahnbürste und einen Handgriff-Verschlussteil voneinander getrennt (ohne Batterie);
- Fig. 2: in Unteransicht und teilweise im Schnitt ein zweites Ausführungsbeispiel einer Zahnbürste im zusammengesetzten Zustand;
- Fig. 3: in Seitenansicht und teilweise im Schnitt die Zahnbürste nach Fig. 2 und den Verschlussteil voneinander getrennt (ohne Batterie);
- Fig. 4: in Seitenansicht ein drittes Ausführungsbeispiel einer Zahnbürste im zusammengesetzten Zustand; und
- Fig. 5: einen vorderen Teil der Zahnbürste nach Fig. 4 mit verschiedenen Ausführungsformen auswechselbarer Behandlungsköpfe.

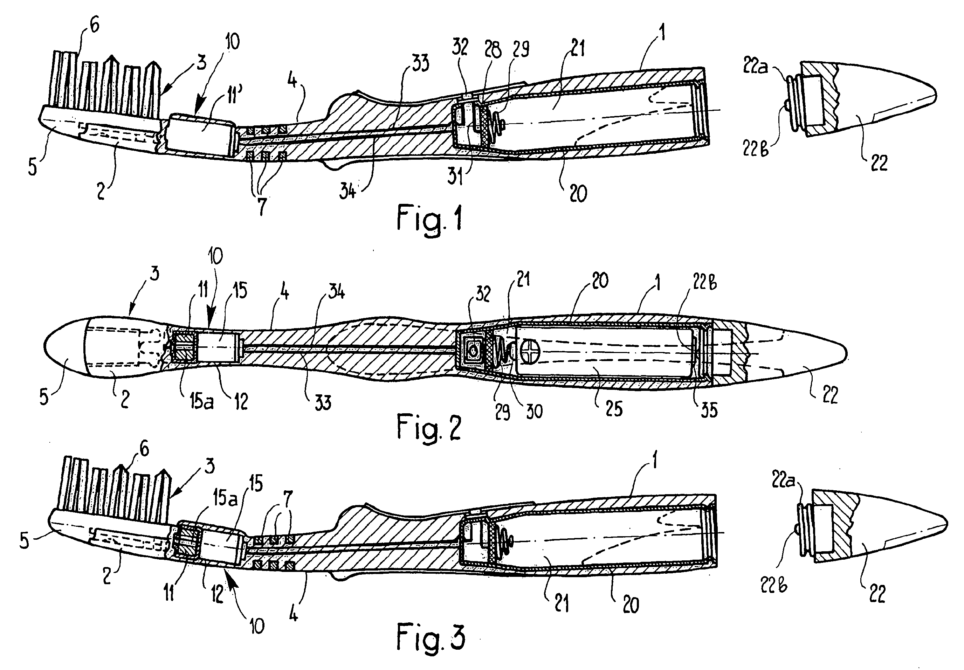

Sowohl die in Fig. 1 dargestellte Zahnbürste als auch diejenige nach Fig. 2 und 3 weist jeweils einen Handgriff 1, einen vorderen, borstentragenden Kopfteil 3 sowie einen den Kopfteil 3 mit dem Handgriff 1 verbindenden Halsteil 4 auf. Die zu Borstenbüscheln 6 zusammengefassten Borsten sind in einem Borstenträger 5 verankert und bilden mit ihren freistehenden Enden eine gegebenenfalls profilierte Bürstfläche. Bei der dargestellten Ausführungsform ist der Borstenträger 5 mit den Borstenbüscheln 6 in einer an sich bekannten und daher nicht näher beschriebenen Weise auswechselbar auf einen Halteteil 2 des Kopfteiles 3 aufgesetzt.

Der Halsteil 4 ist mit Halsteilzonen 7 aus einer elastisch nachgiebigeren Materialkomponente versehen, die die Elastizität des Halsteiles 4 bewirken oder zusätzlich steigern, so dass der borstentragende Kopfteil 3 beim Gebrauch der Zahnbürste bei einer Einwirkung von Kräften in Richtung gegen die Bürstfläche federelastisch zurückdrängbar ist. Gegebenenfalls sind die Halsteilzonen 7 als sich über einen Teil des Halsumfanges erstreckende, mit einem elastisch nachgiebigen Material (z.B. mit thermoplastischem Elastomer) gefüllte Einkerbungen ausgebildet. Eine andere Form und Anzahl von Halsteilzonen wäre selbstverständlich durchaus denkbar. Eine flexible Halszone ist auch ohne Verwendung von elastischen Materialkomponenten denkbar, z.B. durch Einschnürungen oder durch einen Balg.

Im vorderen Kopfteil 3 bzw. im an den Kopfteil 3 angrenzenden Bereich des Halsteiles 4 ist eine mechanische Vibrationsvorrichtung 10 integriert, mittels welcher dem borstentragenden Kopfteil 3 die Zahnreinigung bewirkende oder verstärkende Vibrationen erteilt werden können. Die Vibrationsvorrichtung 10 ist über im Halsteil 4 verlaufende elektrische Verbindungen an eine im Handgriff 1 untergebrachte elektrische Energiequelle anschliessbar, wie anschliessend beschrieben wird. Die bereits erwähnten Halsteilzonen 7 aus einem elastisch nachgiebigen Material wirken dabei als die Schwingung zwischen dem vibrierenden Kopfteil 3 und dem Handgriff 1 dämpfende Mittel, so dass sich die Vibrationswirkung vor allem im Kopfteil entfaltet und nur geringfügig auf den Handgriff 1 übertragen wird. Dies bedeutet, dass während des Zahnreinigungsvorganges nur geringfügige Schwingungen im Handgriff 1 zu verspüren sind, und dadurch die Handhabung der Zahnbürste angenehm ist. Aber auch umgekehrt ist es von Vorteil, dass die erzeugte Vibration durch den Handgriff 1 nicht gedämpft wird und sich im Kopfteil 3 voll auswirken kann. Anstelle der aus elastisch nachgiebigem Material bestehenden Halsteilzonen 7 wären allerdings auch andere schwingungsdämpfende Mittel denkbar; es muss nicht unbedingt ein elastisches Material eingesetzt werden. Die Dämpfung kann auch unter Verwendung eines Grundmaterials durch besondere Formgestaltung des Halsteiles erreicht werden, beispielsweise durch Vorhandensein eines Balg/Ziehharmonika - Teiles etc.

Im Handgriff 1 ist eine sich in seiner Längsrichtung erstreckende Kapsel bzw. Hülse 20 aus elektrisch leitendem Material untergebracht. Sowohl der Handgriff 1 als auch die Hülse 20 sind nach hinten offen, so dass ein durch einen Verschlussteil 22 von hinten verschliessbarer Hohlraum 21 gebildet ist, in den eine Batterie 25, beim dargestellten Ausführungsbeispiel eine handelsübliche, nicht wiederaufladbare Stiftbatterie mit einer definierten Leistung (z.B. 1,5 V) als Energiequelle für die Vibrationsvorrichtung 10 einsetzbar ist. Als Energiequelle könnte allerdings auch eine Knopfbatterie oder eine wiederaufladbare Akku-Zelle Verwendung finden.

In der Hülse 20 ist an einer Querwand 28 ein Federkontakt 29 für den Plus-Pol 30 der Batterie 25 (vgl. Fig. 2) angebracht, der über eine elektrische Leitung 31, einen in der Hülse 20 eingebauten und von der Aussenseite des Handgriffes 1 betätigbaren Schalter 32 und eine im Halsteil 4 verlaufende elektrische Leitung 33 an die Vibrationsvorrichtung 10 angeschlossen ist. Mittels des Schalters 32 kann die elektrische Verbindung unterbrochen werden.

Der Verschlussteil 22 ist mit einem Gewindezapfen 22a aus einem elektrisch leitenden Material ausgestattet und mit diesem in den Handgriff 1 bzw. in die Hülse 20 einschraubbar. Der Gewindezapfen 22a ist mit einer Kontaktfläche 22b versehen, die beim eingeschraubten Verschlussteil 22 am Minus-Pol 35 der in die Hülse 20 eingesetzten Batterie 25 zur Anlage kommt. Die elektrische Verbindung des Minus-Pols 35 mit der Vibrationsvorrichtung 10 erfolgt über den Gewindezapfen 22a, die Hülse 20 selber und eine die Hülse 20 an die Vibrationsvorrichtung 10 anschliessende, im Halsteil 4 verlaufende Leitung 34.

Anstatt über die elektrisch leitende Hülse 20 könnte die Stromübertragung auch anders erfolgen, beispielsweise unter Verwendung von Drähten oder eines elektrisch leitenden Kunststoffes.

Bei dem in Fig. 1 dargestellten Ausführungsbeispiel umfasst die Vibrationsvorrichtung 10 ein vorzugsweise in der Art eines Schwingungsankers funktionierendes Vibrationselement 11', das über die Leitungen 33, 34 direkt mit der Energiequelle elektrisch verbindbar ist und bei angeschlossener Energiequelle in Vibrationen versetzt wird.

Bei der in Fig. 2 und 3 dargestellten Zahnbürsten-Variante besteht die Vibrationsvorrichtung 10 aus einem Vibrationselement 11 in Form eines mechanische Vibrationen erzeugenden, um eine in Längsrichtung der Zahnbürste liegende Achse drehbaren Exzenters und aus einem unmittelbar angrenzend angeordneten, als Mikromotor 15 ausgebildeten Antrieb. Das Vibrationselement 11 ist mit der Welle 15a des über die Leitungen 33, 34 mit der Energiequelle elektrisch verbindbaren Mikromotors 15 verbunden. Der Mikromotor 15 und der Exzenter können als eine Baueinheit in einem Gehäuse 12 untergebracht werden.

Statt eines drehbeweglich antreibbaren Exzenters könnte auch ein translatorisch antreibbares Vibrationselement 11 in Frage kommen.

Es wäre möglich, bei der beschriebenen Zahnbürste den borstentragenden Kopfteil 3 beweglich gegenüber dem Halsteil 4 anzuordnen, um diesen bei mittels der Vibrationsvorrichtung 10 erzeugten Vibrationen in eine Bewegung gegenüber dem restlichen Teil der Zahnbürste zu versetzen.

Die elektrischen Leitungen 31, 33, 34 könnten auch mit Elektrizität leitenden Kunststoffbahnen realisiert werden.

Beim die Leitungen 31, 33 verbindenden oder unterbrechenden Schalter 32 kann es sich beispielsweise auch um einen Magnetschalter handeln.

Die bevorzugte Ausgestaltung des Schalters 32 beinhaltet jedoch einen auf einem Print angeordneten Impulsschalter und weitere elektronische Komponenten, welche den Schaltzustand speichern.

Die elektrische Verbindung zwischen der Batterie 25 und dem Vibrationselement 11' (Fig. 1) oder dem Antrieb 15 (Fig. 2 und 3) kann aber auch statt durch den Schalter 32 durch Drehen des in den Handgriff 1 bzw. in die Hülse 20 einschraubbaren oder mit diesen bajonettartig verbindbaren Verschlussteiles 22 bewerkstelligt oder unterbrochen werden (d.h. bei einer solchen Ausführung entfällt der Schalter 32).

Statt der Schraubverbindung des hinteren Verschlussteils 22 mit dem Handgriff 1 wäre selbstverständlich auch eine andere lösbare Verbindung (z.B. Steckverbindung, Bajonettverbindung etc.) und eine entsprechende Ausgestaltung des mit dem Minus-Pol 35 zusammenwirkenden Kontaktteils möglich.

Der Verschlussteil 22 könnte auch eine durchaus andere Form aufweisen, als in der Zeichnung dargestellt. Beispielsweise könnte der Verschlussteil mit einer Abstellfläche bzw. einem Fussteil ausgestattet sein und somit als ein Element zum Aufstellen der Zahnbürste dienen.

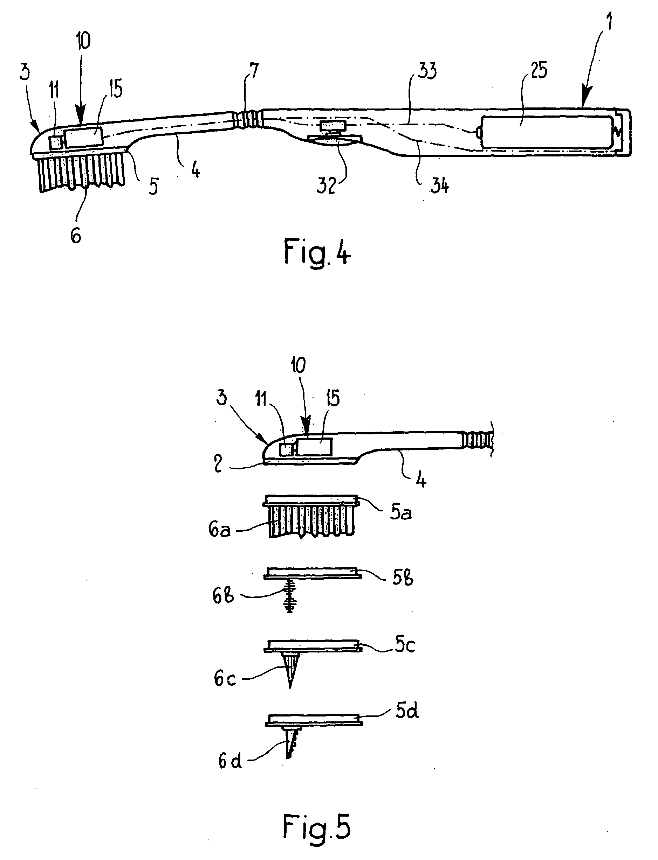

Die in Fig. 4 dargestellte Zahnbürste entspricht im wesentlichen derjenigen nach Fig. 2 und 3; die gleichen Teile sind wiederum mit den gleichen Bezugsziffern bezeichnet. Gemäss Fig. 4 ist die Vibrationsvorrichtung 10 direkt im vorderen Kopfteil 3 angeordnet. Bei diesem Ausführungsbeispiel entfällt die Hülse 20; die Batterie 25 ist direkt über die Leitungen 33, 34 mit der Vibrationsvorrichtung 10 verbunden. Auch bei dieser Zahnbürste wird vorzugsweise ein auf einen Halteteil 2 des Kopfteiles 3 z.B. in der Art einer Schnappverbindung aufsetzbarer, auswechselbarer Borstenträger 5 verwendet. Die Auswechselbarkeit des mit den Borstenbüscheln 6 versehenen Borstenträgers 5 ist von besonderem Vorteil, da die mit der Vibrationsvorrichtung 10 ausgestattete Zahnbürste unabhängig von der Lebensdauer der Borsten, die in der Regel sogar kleiner ist als die Lebensdauer der Batterie 25, verwendet werden kann.

Wie aus Fig. 5 ersichtlich können dabei statt des Borstenträgers 5 bzw. 5a, der einen Teil eines konventionellen Bürstenkopfes bildet und mit Borstenbüscheln 6 bzw. 6a versehen ist, wahlweise verschiedene andere Borstenträger bzw. Adapter 5b bis 5d auf den Halteteil 2 aufgesetzt werden, die mit verschiedenen Interdentalbürsten 6b, 6c bzw. Interdental-Behandlungsteilen 6d zur wirksamen Reinigung der Zahnzwischenräume versehen sind. Die Interdentalbürste 6b kann beispielsweise als eine Spiralbürste aus beschichtetem Draht mit eingedrehten Kunststofffilamenten ausgebildet sein. Die Interdentalbürste 6c besteht aus Borsten, die zusammen eine Bündelspitze bilden. Der Behandlungsteil 6d kann z.B. als ein eine Spitze aufweisendes Kunststoffelement ausgebildet sein, der vorzugsweise mit einer abrasiven Beschichtung zur Entfernung von Plaque und Zahnstein in den Zahnzwischenräumen versehen sein kann. Selbstverständlich könnten auch andere beliebige Behandlungsköpfe verwendet werden.

Auch bei der Variante nach Fig. 4 und 5 könnte der Borstenträger 5 derart ausgestaltet werden, dass eine vibrationsbedingte Bewegung gegenüber dem Halteteil 2 möglich wäre.

Zur Einbringung der Vibrationsvorrichtung 10, der Verbindungsleitungen 33, 34 und weiterer elektronischen Komponenten kann die Zahnbürste bzw. ihr Gehäuse zweiteilig hergestellt und die beiden Teile nach dem Hineinlegen der vorstehend erwähnten Teile wasserdicht verschweisst werden.

Die beschriebene Zahnbürste wird in einem Zwei- oder Mehrkomponenten-Spritzgiessverfahren hergestellt. Dabei werden die vorstehend erwähnten Teile als eine Einheit in einen aus einer ersten Materialkomponente gespritzten Formteil eingelegt und danach mit der zweiten Materialkomponente (oder mit den weiteren Materialkomponenten) umspritzt. Es muss sich dabei nicht um vollständiges Umspritzen handeln. Gewisse Teile können frei liegen, wodurch eine ästhetische Wirkung erzielt werden kann.

Dadurch, dass nicht nur das Vibrationselement 11, 11' selber sondern auch der Antrieb, d.h. der Mikromotor 15, im vorderen Kopfteil 3 oder im unmittelbar angrenzenden vorderen Bereich des Halsteiles 4 angeordnet sind, müssen keine mechanische Antriebsmittel zur Verbindung des Mikromotors mit dem Vibrationselement 11 durch den flexiblen Halsteil 4 geführt werden. Durch den Halsteil 4 verlaufen lediglich die elektrischen Leitungen 33, 34 (Drähte, Kabel oder elektrisch leitende Kunststoffbahnen).

Vorzugsweise wird eine mechanische Vibrationsvorrichtung 10 verwendet, die einen Durchmesser von weniger als 15 mm, vorzugsweise weniger als 6 mm aufweist, und weniger als 35 mm, vorzugsweise weniger als 20 mm lang ist. Dadurch wird gewährleistet, dass die Zahnbürste ergonomisch ausgestaltet werden kann und gut handhabbar ist. Die Zahnbürste entspricht in ihrer Grösse ungefähr den herkömmlichen Handzahnbürsten, was eine einfachere Handhabung im Vergleich zu den auf dem Markt erhältlichen, wesentlich grösseren Elektrozahnbürsten bedeutet, und dennoch wird mit dieser Zahnbürste eine mit den bekannten Elektrozahnbürsten vergleichbare, diesen gegenüber jedoch schonendere Reinigungswirkung erreicht. Ausserdem ist diese Zahnbürste in der Herstellung einfach und kostengünstig.

Die Vibrationsvorrichtung könnte allerdings auch in herkömmlichen Elektrozahnbürsten integriert werden.

## Patentansprüche

1. Verfahren zum Herstellen eines Zahnpflegegerätes, das einen elektrischen Verbraucher (10), eine elektrische Energiequelle (25) und elektrische Leitungen (33, 34), die in einem, aus einer ersten Materialkomponente bestehenden Formteil untergebracht sind, aufweist, **dadurch gekennzeichnet, dass** der Formteil aus der ersten Materialkomponente im Spritzgiessverfahren hergestellt wird, dass dann elektrische Komponenten, einschliesslich elektrischer Verbraucher (10) und elektrische Leitungen (33, 34), in den Formteil eingelegt werden und dass anschliessend die elektrischen Komponenten im Spritzgiessverfahren wenigstens teilweise mit mindestens einer weiteren Materialkomponente umspritzt werden.

2. Verfahren nach Anspruch 1, **dadurch gekennzeichnet, dass** die elektrischen Komponenten nur teilweise mit der mindestens einen weiteren Materialkomponente umspritzt werden und zum Teil frei liegen.

3. Verfahren nach Anspruch 1 oder 2 zum Herstellen eines Zahnpflegegerätes, das einen Handgriff (1) und einen Kopfteil (3) aufweist, **dadurch gekennzeichnet, dass** die Energiequelle (25) im Handgriff (1) und der Verbraucher (10) im Kopfteil (3) oder in einem an den Kopfteil (3) angrenzenden Bereich untergebracht werden und dass der Verbraucher (10) über die elektrischen Leitungen (33, 34) mit der Energiequelle (25) verbunden wird.

4. Verfahren nach einem der Ansprüche 1 bis 3, **dadurch gekennzeichnet, dass** die elektrischen Leitungen (33, 34) durch eine flexible Zone (7) hindurch geführt werden.

5. Verfahren nach Anspruch 4, **dadurch gekennzeichnet, dass** die flexible Zone (7) mindestens aus der ersten Materialkomponente und der aus einem elastisch nachgiebigen Material bestehenden weiteren Materialkomponente, die vorzugsweise schwingungsdämpfend wirkt, gebildet wird.

6. Verfahren nach einem der Ansprüche 1 bis 5, **dadurch gekennzeichnet, dass** die elektrischen Leitungen (33, 34) durch einen sich gegenüber dem Handgriff (1) verjüngenden Bereich hindurch geführt werden.

7. Verfahren nach einem der Ansprüche 1 bis 6 zum Herstellen eines Zahnpflegegerätes, bei dem der elektrische Verbraucher eine elektrisch angetriebene, mechanische Vibrationsvorrichtung (10) ist.

8. Verfahren nach Anspruch 7 zum Herstellen eines Zahnpflegegerätes, das einen Handgriff (1) und einen Kopfteil (3) aufweist, der durch die Vibrationsvorrichtung (10) in Schwingung versetzt wird.

9. Verfahren nach den Ansprüchen 5 und 8 **dadurch gekennzeichnet, dass** die flexible Zone (7) zwischen Handgriff (1) und Vibrationsvorrichtung (10) angeordnet wird.

10. Verfahren nach Anspruch 1, **dadurch gekennzeichnet, dass** die elektrischen Leitungen (33, 34) und der elektrische Verbraucher (10) eine Einheit bilden, die in den aus der ersten Materialkomponente hergestellten Formteil eingelegt und anschliessend wenigstens teilweise mit der mindestens einen weiteren Materialkomponente umspritzt wird.

11. Verfahren nach einem der Ansprüche 7 bis 10, **dadurch gekennzeichnet, dass** eine Vibrationsvorrichtung (10) verwendet wird, die ein Vibrationselement (11) aufweist, das von einem Antrieb (15) angetrieben wird, der über die elektrischen Leitungen (33, 34) mit der Energiequelle (25) elektrisch verbunden werden kann.

12. Verfahren nach Anspruch 1, **dadurch gekennzeichnet, dass** der elektrische Verbraucher (10) in einem Gehäuse (12) untergebracht wird und eine Baueinheit umfassend den elektrischen Verbraucher (10) und das Gehäuse (12) in den aus der ersten Materialkomponente hergestellten Formteil eingelegt und anschliessend wenigstens teilweise mit der mindestens einen weiteren Materialkomponente umspritzt wird.

13. Zahnpflegegerät mit einem elektrischen Verbraucher (10), einer elektrischen Energiequelle (25) und elektrischen Leitungen (33, 34), die in einem, aus einer ersten Materialkomponente bestehenden Formteil untergebracht sind, hergestellt nach dem Verfahren gemäss einem der Ansprüche 1 bis 12, **dadurch gekennzeichnet, dass** in den aus der ersten Materialkomponente im Spritzgiessverfahren hergestellten Formteil elektrische Komponenten, einschliesslich elektrischer Verbraucher (10) und elektrische Leitungen (33, 34) eingelegt sind, die im Spritzgiessverfahren wenigstens teilweise mit mindestens einer weiteren Materialkomponente umspritzt sind.

14. Zahnpflegegerät nach Anspruch 13, **dadurch gekennzeichnet, dass** die elektrischen Komponenten nur teilweise mit der mindestens einen weiteren Materialkomponente umspritzt sind und zum Teil frei liegen.

15. Zahnpflegegerät nach Anspruch 13 oder 14 mit einem Handgriff (1) und einem Kopfteil (3), **dadurch gekennzeichnet, dass** der Formteil Teil des Handgriffes (1) und/oder des Kopfteils (3) bildet.

16. Zahnpflegegerät nach Anspruch 13, **dadurch gekennzeichnet, dass** in den aus der ersten Materialkomponente hergestellten Formteil eine Einheit, die durch die elektrischen Leitungen (33, 34) und den elektrischen Verbraucher (10) gebildet ist, eingelegt ist, und diese Einheit wenigstens teilweise mit der mindestens einen weiteren Materialkomponente umspritzt ist.

17. Zahnpflegegerät nach einem der Ansprüche 13 bis 16, **dadurch gekennzeichnet, dass** der elektrische Verbraucher eine Vibrationsvorrichtung (10) ist, die ein Vibrationselement (11) aufweist, das von einem mit der Energiequelle (25) elektrisch verbindbaren Antrieb (15) angetrieben ist.

18. Zahnpflegegerät nach Anspruch 17 mit einem Handgriff (1) und einem Kopfteil (3), **dadurch gekennzeichnet, dass** der Kopfteil (3) durch die Vibrationsvorrichtung (10) in Schwingung versetzbar ist und dass zwischen dem Handgriff (1) und der Vibrationsvorrichtung (10) eine flexible Zone (7) vorgesehen ist, die mindestens aus der ersten Materialkomponente und der, aus einem elastisch nachgiebigen Material bestehenden weiteren Materialkomponente, die vorzugsweise schwingungsdämpfend wirkt, gebildet ist.

## Claims

1. Method for manufacturing a dental care device, which has an electrical load (10), an electrical energy source (25) and electrical lines (33, 34), which are accommodated in a moulded part consisting of a first material component, **characterized in that** the moulded part is produced from the first material component by the injection-moulding process, **in that** electrical components, including the electrical load (10) and electrical lines (33, 34), are then placed into the moulded part and **in that** the electrical components are subsequently at least partially encapsulated with at least one further material component by the injection-moulding process.

2. Method according to Claim 1, **characterized in that** the electrical components are only partially encapsulated with the at least one further material component and are partly exposed.

3. Method according to Claim 1 or 2 for manufacturing a dental care device, which has a handle (1) and a head part (3), **characterized in that** the energy source (25) is accommodated in the handle (1) and the load (10) is accommodated in the head part (3) or in a region adjacent to the head part (3) and **in that** the load (10) is connected to the energy source (25) by way of the electrical lines (33, 34).

4. Method according to one of Claims 1 to 3, **characterized in that** the electrical lines (33, 34) are led through a flexible zone (7).

5. Method according to Claim 4, **characterized in that** the flexible zone (7) is formed at least from the first material component and the further material component consisting of an elastically compliant material, which preferably has a vibration-damping effect.

6. Method according to one of Claims 1 to 5, **characterized in that** the electrical lines (33, 34) are led through a region tapering with respect to the handle (1).

7. Method according to one of Claims 1 to 6 for manufacturing a dental care device, in which the electrical load is an electrically driven, mechanical vibration device (10).

8. Method according to Claim 7 for manufacturing a dental care device, which has a handle (1) and a head part (3), which is made to vibrate by the vibration device (10).

9. Method according to Claims 5 and 8, **characterized in that** the flexible zone (7) is arranged between the handle (1) and the vibration device (10).

10. Method according to Claim 1, **characterized in that** the electrical lines (33, 34) and the electrical load (10) form a unit which is placed into the moulded part produced from the first material component and is subsequently at least partially encapsulated with the at least one further material component.

11. Method according to one of Claims 7 to 10, **characterized in that** a vibration device (10) is used, having a vibration element (11), which is driven by a drive (15), which can be electrically connected to the energy source (25) by way of the electrical lines (33, 34).

12. Method according to Claim 1, **characterized in that** the electrical load (10) is accommodated in a housing (12) and a structural unit comprising the electrical load (10) and the housing (12) is placed into the moulded part produced from the first material component and is subsequently at least partially encapsulated with the at least one further material component.

13. Dental care device, with an electrical load (10), an electrical energy source (25) and electrical lines (33, 34), which are accommodated in a moulded part consisting of a first material component, manufactured by the method according to one of Claims 1 to 12, **characterized in that** electrical components, including the electrical load (10) and electrical lines (33, 34), have been placed into the moulded part produced from the first material component by the injection-moulding process and have been at least partially encapsulated with at least one further material component by the injection-moulding process.

14. Dental care device according to Claim 13, **characterized in that** the electrical components have only been partially encapsulated with the at least one further material component and are partly exposed.

15. Dental care device according to Claim 13 or 14, with a handle (1) and a head part (3), **characterized in that** the moulded part forms part of the handle (1) and/or of the head part (3).

16. Dental care device according to Claim 13, **characterized in that** a unit which is formed by the electrical lines (33, 34) and the electrical load (10) has been placed into the moulded part produced from the first material component, and this unit has been at least partially encapsulated with the at least one further material component.

17. Dental care device according to one of Claims 13 to 16, **characterized in that** the electrical load is a vibration device (10), which has a vibration element (11), which is driven by a drive (15), which can be electrically connected to the energy source (25).

18. Dental care device according to Claim 17, with a handle (1) and a head part (3), **characterized in that** the head part (3) can be made to vibrate by the vibration device (10) and **in that** a flexible zone (7), which is formed at least from the first material component and the further material component consisting of an elastically compliant material, which preferably has a vibration-damping effect, is provided between the handle (1) and the vibration device (10).

## Revendications

1. Procédé de fabrication d'un appareil de soins dentaires, qui présente un récepteur électrique (10), une source d'énergie électrique (25) et des lignes électriques (33, 34) qui sont montées dans une pièce moulée constituée d'un premier composant de matériau, **caractérisé en ce que** la pièce moulée en le premier composant de matériau est fabriquée par un procédé de moulage par injection, **en ce que** des composants électriques, y compris le récepteur électrique (10) et les lignes électriques (33, 34) sont ensuite incorporés dans la pièce moulée, et **en ce qu'**ensuite, les composants électriques sont revêtus d'un surmoulage au moins en partie avec au moins un autre composant de matériau par un procédé de moulage par injection.

2. Procédé selon la revendication 1, **caractérisé en ce que** les composants électriques ne sont revêtus que partiellement par surmoulage par l'au moins un autre composant de matériau, et sont en partie exposés.

3. Procédé selon la revendication 1 ou 2, de fabrication d'un appareil de soins dentaires, qui présente une poignée (1) et une partie de tête (3), **caractérisé en ce que** la source d'énergie (25) est montée dans la poignée (1) et le récepteur (10) est monté dans la partie de tête (3) ou dans une région adjacente à la partie de tête (3), et **en ce que** le récepteur (10) est connecté à la source d'énergie (25) par le biais des lignes électriques (33, 34).

4. Procédé selon l'une quelconque des revendications 1 à 3, **caractérisé en ce que** les lignes électriques (33, 34) sont guidées à travers une zone flexible (7).

5. Procédé selon la revendication 4, **caractérisé en ce que** la zone flexible (7) est formée au moins à partir du premier composant de matériau et de l'autre composant de matériau comportant un matériau élastiquement flexible, qui agit de préférence avec un effet d'amortissement des vibrations.

6. Procédé selon l'une quelconque des revendications 1 à 5, **caractérisé en ce que** les lignes électriques (33, 34) sont guidées à travers une région se rétrécissant par rapport à la poignée (1).

7. Procédé selon l'une quelconque des revendications 1 à 6, de fabrication d'un appareil de soins dentaires, dans lequel le récepteur électrique est un dispositif vibrant (10) mécanique entraîné électriquement.

8. Procédé selon la revendication 7, de fabrication d'un appareil de soins dentaires, qui présente une poignée (1) et une partie de tête (3), qui est mise en oscillation par le dispositif vibrant (10).

9. Procédé selon les revendications 5 et 8, **caractérisé en ce que** la zone flexible (7) est disposée entre la poignée (1) et le dispositif vibrant (10).

10. Procédé selon la revendication 1, **caractérisé en ce que** les lignes électriques (33, 34) et le récepteur électrique (10) forment une unité qui est incorporée dans la partie moulée fabriquée en le premier composant de matériau, et qui est ensuite revêtue par surmoulage au moins en partie avec l'au moins un autre composant de matériau.

11. Procédé selon l'une quelconque des revendications 7 à 10, **caractérisé en ce que** l'on utilise un dispositif vibrant (10) qui présente un élément vibrant (11) qui est entraîné par un entraînement (15) qui peut être connecté électriquement par le biais des lignes électriques (33, 34) à la source d'énergie (25).

12. Procédé selon la revendication 1, **caractérisé en ce que** le récepteur électrique (10) est monté dans un boîtier (12) et une unité constructive comprenant le récepteur électrique (10) et le boîtier (12) est incorporée dans la partie moulée fabriquée en le premier composant de matériau, et est ensuite revêtue par surmoulage au moins en partie avec l'au moins un autre composant de matériau.

13. Appareil de soins dentaires comprenant un récepteur électrique (10), une source d'énergie électrique (25) et des lignes électriques (33, 34), qui sont montées dans une pièce moulée constituée d'un premier composant de matériau, fabriquée suivant le procédé selon l'une quelconque des revendications 1 à 12, **caractérisé en ce que** dans la pièce moulée fabriquée en le premier composant de matériau par un procédé de moulage par injection, sont incorporés des composants électriques, y compris le récepteur électrique (10) et les lignes électriques (33, 34), qui sont revêtus d'un surmoulage au moins en partie avec au moins un autre composant de matériau par un procédé de moulage par injection.

14. Appareil de soins dentaires selon la revendication 13, **caractérisé en ce que** les composants électriques ne sont revêtus que partiellement par surmoulage par l'au moins un autre composant de matériau, et sont en partie exposés.

15. Appareil de soins dentaires selon la revendication 13 ou 14, comprenant une poignée (1) et une partie de tête (3), **caractérisé en ce que** la partie moulée forme une partie de la poignée (1) et/ou de la partie de tête (3).

16. Appareil de soins dentaires selon la revendication 13, **caractérisé en ce que** dans la partie moulée fabriquée en le premier composant de matériau est incorporée une unité qui est formée par les lignes électriques (33, 34) et le récepteur électrique (10), et cette unité est au moins en partie revêtue par surmoulage avec l'au moins un autre composant de matériau.

17. Appareil de soins dentaires selon l'une quelconque des revendications 13 à 16, **caractérisé en ce que** le récepteur électrique est un dispositif vibrant (10) qui présente un élément vibrant (11) qui est entraîné par un entraînement (15) pouvant être connecté électriquement à la source d'énergie (25).

18. Appareil de soins dentaires selon la revendication 17, comprenant une poignée (1) et une partie de tête (3), **caractérisé en ce que** la partie de tête (3) peut être mise en oscillation par le dispositif vibrant (10), et **en ce qu'**entre la poignée (1) et le dispositif vibrant (10) est prévue une zone flexible (7) qui est formée au moins à partir du premier composant de matériau et de l'autre composant de matériau comportant un matériau élastiquement flexible, qui agit de préférence avec un effet d'amortissement des vibrations.
